# EUROPÄISCHE PATENTSCHRIFT

(11) **EP 1 463 970 B1**
(45) Veröffentlichungstag und Bekanntmachung des Hinweises auf die Patenterteilung: **01.06.2016**
(21) Anmeldenummer: 02719807.6
(22) Anmeldetag: 12.02.2002
(51) Int. Cl.: G02C 7/08

(54) **BINOKULARE OPTISCHE VORRICHTUNG, INSBESONDERE ELEKTRONISCHE BRILLE, MIT EINER ELEKTRONISCHEN KAMERA ZUR AUTOMATISCHEN SCHARFSTELLUNG EINSCHLIESSLICH KORREKTUR VERSCHIEDENER SEHFEHLER**
BINOCULAR OPTICAL DEVICE, IN PARTICULAR ELECTRONIC SPECTACLES, COMPRISING AN ELECTRONIC CAMERA FOR AUTOMATICALLY SETTING A FOCUS THAT INCLUDES THE CORRECTION OF DIFFERENT VISION DEFECTS
DISPOSITIF OPTIQUE BINOCULAIRE, NOTAMMENT LUNETTES ELECTRONIQUES, POURVU D'UNE CAMERA ELECTRONIQUE POUR LA MISE AU POINT AUTOMATIQUE AVEC CORRECTION DE DIFFERENTS DEFAUTS DE LA VISION

(30) Priorität: 12.02.2001 DE 10106650
(43) Veröffentlichungstag der Anmeldung: 06.10.2004
(73) Patentinhaber: Hoffmann, Klaus, 81476 München (DE)
(72) Erfinder: Hoffmann, Klaus, 81476 München (DE)
(74) Vertreter: Dreykorn-Lindner, Werner
(86) Internationale Anmeldenummer: PCT/EP2002/001454
(87) Internationale Veröffentlichungsnummer: WO 2002/065197

(56) Entgegenhaltungen:
- WO-A-99/23524
- DE-A- 19 959 379
- DE-U- 20 019 216
- US-A- 4 516 157
- US-A- 4 865 438
- US-A- 5 182 585

## Beschreibung

Die Erfindung betrifft gemäß Patentanspruch 1 in erster Linie eine binokulare optisches Vorrichtung, insbesondere elektronische Brille.

Brillen oder Sehhilfen bzw. Augengläser zur Korrektur von Augenfehlern oder zum Schutz gegen Licht, Staub, Splitter u. ä. verschiedener Art sind seit langem bekannt. Meist weisen derartige Sehhilfen Linsen oder Prismen auf, die vor den Augen getragen werden, um verschiedene Sehfehler zu korrigieren. Die am weitesten verbreitete Brillenform besteht aus einem Paar gläserner Linsen, die von einem Metall- oder Plastikrahmen gehalten und auf den Nasensattel gesetzt werden. Der Rahmen wird durch Bügel, die seitlich um den Kopf greifen oder hinter den Ohren eingehakt werden, in der richtigen Stellung gehalten. Brillen mit Linsen aus Kunststoff sind heute gebräuchlicher, da dieses Material nicht so leicht zerbricht und weniger wiegt.

Das Auge des Menschen ist ein Kameraauge mit einem Linsenapparat und mit zu einer Netzhaut (Retina) zusammengefassten Sehzellen und weist eine kugelförmige Struktur mit einem Durchmesser von etwa 2,5 Zentimetern und einer deutlichen Ausbuchtung auf der Vorderseite auf. Der kugelförmige Augapfel wird von der weißen derben Lederhaut (Sclera), die vorn als durchsichtige Hornhaut (Cornea) ausgebildet ist, eingeschlossen. Innen liegt auf der Lederhaut die gefäßreiche Aderhaut (Chorioidea) auf, die an der Hornhautgrenze die ringförmige Regenbogenhaut (Iris) bildet. Durch die Regenbogenhaut hindurch gibt das Sehloch (Pupille) die Sicht frei, wobei durch Kontraktion oder Entspannung der Irismuskel die Pupille verkleinert oder vergrößert und so dafür sorgt, dass immer die richtige Lichtmenge ins Auge gelangt. Der Aderhaut liegt innen die Netzhaut (Retina) auf, die aus den Sehzellen besteht und die Lichtempfindungen aufnimmt, verarbeitet und über den Sehnerv dem Gehirn zuleitet. Das Innere des Auges ist mit dem durchsichtigen Glaskörper ausgefüllt, der dem Augapfel Spannung und Festigkeit verleiht und Aderhaut und Netzhaut an die Unterlage andrückt. Hinter der Regenbogenhaut und der Pupille ist die Linse ausgespannt, die durch besondere glatte Muskeln (Ziliarmuskel) gewölbt oder abgeflacht werden kann (Akkommodation). Durch andere Muskeln kann die Pupille erweitert oder verengt werden. Der Pupillenrand liegt der vorderen Linsenfläche auf und trennt die mit Kammerwasser gefüllte hintere Kammer des Auges von der zwischen Linse, Regenbogenhaut und Hornhaut liegenden vorderen Kammer.

Die Funktionsweise des Auges ähnelt, wie bereits vorstehend erwähnt, einer einfachen Kamera: Die Linse wirft ein kopfstehendes Bild der Außenwelt auf die lichtempfindliche Netzhaut, die dem Film in der Kamera entspricht. Das Scharfstellen des Bildes (also die Fokussierung) erfolgt, wie bereits erwähnt, durch Abflachung oder Verdickung der Linse - diesen Vorgang nennt man auch Akkomodation. Bei einem gesunden Auge ist zum Erkennen entfernter Gegenstände keine Akkomodation erforderlich: Die Linse ist durch ihre Haltebänder abgeflacht und wirft ein scharfes Bild dieser Gegenstände auf die Netzhaut. Je näher das betrachtete Objekt jedoch ist, desto stärker zieht sich der Ziliarmuskel zusammen - die Haltebänder erschlaffen, und die Linse rundet sich ab. Ein kleinkind kann noch auf eine Entfernung von etwa sechs Zentimetern scharf sehen, aber mit zunehmendem Alter lässt die Elastizität der Linse nach, so dass die Grenze des scharfen Sehens mit 30 Jahren etwa bei 15 Zentimetern und mit 50 Jahren bei 40 Zentimetern liegt. In höherem Alter verlieren die meisten Menschen die Fähigkeit, ihre Augen auf Lese- oder Arbeitsdistanz zu akkomodieren.

Brechungsfehler führen zu unklaren Sehbildern. Sie entstehen aus Anlagefehlern des Augapfels, der Hornhaut oder der Linse oder durch Lähmung der inneren Augenmuskeln (Stabsichtigkeit, Über- und Kurzsichtigkeit u. a.). Brechungsfehler (Refraktionsanömalien), d.h. Abweichungen von der normalen Lichtbrechung im Auge mit entsprechenden Sehfehlern sind: Kurzsichtigkeit, Übersichtigkeit und Astigmatismus.

Die Kurzsichtigkeit, auch Myopie genannt, ist eine mangelhafte Funktion des Auges, die auf einer Verlängerung der Augenachse (Achsen-Myopie) oder zu starker Brechkraft der Linse (Brechungs-Myopie) beruht; dadurch vereinigen sich die von der Linse gebrochenen Strahlen bereits vor dem Auftreffen auf der Netzhaut. Auf kurze Entfernung ist das Sehen noch möglich, auf normale und weitere Entfernung indes wird das Bild unklar. Kurzsichtigkeit ist meist angeboren, entwickelt sich jedoch oft erst in späteren Lebensjahren. Ausgleich: durch konkav geschliffene Brillengläser.

Die Übersichtigkeit auch Hypermetropie, Hyperopie oder früher Weitsichtigkeit genannt, ist ein Brechungsfehler des Auges infolge eines Missverhältnisses zwischen der Brechkraft der Linse und der Länge des Augapfels. Entweder (meistens) ist der Augapfel zu kurz, d.h. Achsenübersichtigkeit, oder die Brechkraft ist zu gering, d.h. Brechungsübersichtigkeit. In beiden Fällen liegt der (gedachte) Vereinigungspunkt paralleler Strahlen erst hinter der Netzhaut, und das entstehende Bild ist unscharf. Die Korrektur der Übersichtigkeit erfolgt durch Konvexgläser. Eine altersbedingte Form der Übersichtigkeit, und zwar eine Brechungsübersichtigkeit, ist die Alterssichtigkeit (oder Presbyopie genannt), d.h. eine Übersichtigkeit, die auf altersbedingter Abnahme der Akkommodationsfähigkeit infolge Elastizitätsverlusts der Augenlinse beruht).

Für Astigmatismus (Stabsichtigkeit, auf unregelmäßiger Krümmung meist der Hornhaut beruhender Brechungsfehler des Auges, meist erblich und angeboren) sind zylindrisch geschliffene Gläser und Kontaktschalen vorgesehen, die eine Unsymmetrie des Auges und damit den Astigmatismus ausgleichen. Schließlich sind für Konvergenzfehler die Augengläser als Prisma geschliffen.

Oft ist es erforderlich, Linsen in einer Kombination aus den oben genannten Formen zu schleifen, um mehrere Anomalien gleichzeitig zu korrigieren. Die Brennweite des ganzen Augensystems wird dabei so vergrößert bzw. verkleinert, dass beim ruhenden Auge von weit entfernten Gegenständen kommende (parallele) Strahlen ein scharfes Bild auf der Netzhaut erzeugen. Die Stärke (Brechkraft) der Linsen wird durch den reziproken Wert der Brennweite in Meter gemessen, der als Dioptrie (Zeichen: dpt, früher dptr.) bezeichnet wird. Eine Linse von 1 m Brennweite hat danach die Brechkraft 1 dpt = 1 m⁻¹.

Mit + werden die Sammellinsen, mit - die Zerstreuungslinsen bezeichnet; z. B. ist eine Linse mit + 2 dpt eine Sammellinse von 50 cm Brennweite (für Weitsichtige), eine mit - 2 dpt eine Zerstreuungslinse von 50 cm Brennweite (für Kurzsichtige).

Bei Bifokalgläsern (Linsen mit zwei Brennpunkten) ist der obere Teil für das Sehen in die Ferne, der untere für das Nahsehen geschliffen, so dass der Brillenträger nur nach unten blicken muss, um z. B. lesen zu können, und nach oben, um Objekte in der Ferne scharf zu erkennen. Trifokale Linsen sind bifokale Linsen, in deren Mitte eine weitere Linse für mittlere Entfernung geschliffen wurde. Außer im Brillengestell werden die Augengläser im Klemmer (Zwicker, Pincenez) oder als Stielglas (Lorgnette) oder Einglas (Monokel) getragen; Haftgläser (dünne Glasschalen) werden unsichtbar unter den Augenlidern direkt auf oder Hornhaut angebracht.

Auch Kameras (allgemein jedes photographische Aufnahmegerät) sind seit langem bekannt. Moderne Kameras bestehen aus vier Grundbauteilen: einem Gehäuse, einem Verschluss, einer Blende und einem Objektiv. Im- lichtdichten Gehäuse mit der Blende und dem Verschluss befindet sich der Film. Das Objektiv, das an der Kamerafront angebracht ist, besteht aus mehreren optischen Glaslinsen. Es ermöglicht dem Photographen, sein Motiv so zu fokussieren, dass auf den Film ein scharfes Bild projiziert wird. Die zumeist variable Blende und der Verschluss regulieren gemeinsam den Lichteinfall. Variable Blenden bestehen aus Metall- oder Kunststofflamellen, die eine verstellbare, kreisförmige Öffnung gewähren. Den verschiedenen Blendengrößen entsprechen Blendenzahlen, die auf der. Kamera oder dem Objektiv angegeben sind. Kleine Blendenzahlen bezeichnen eine große Blendenöffnung, große Blendenzahlen eine kleine.

Der Verschluss im Strahlengang der Kamera regelt durch Öffnen und Schließen die Länge des Lichteinfalls (Belichtungszeit). Die meisten modernen Kameras verfügen über einen Schlitzverschluss oder eine Irisblende sowie über ein Suchersystem, das es dem Photographen möglich macht, den Bildausschnitt exakt zu wählen. Alle einäugigen Spiegelreflexkameras sind mit dieser Vorrichtung ausgestattet. Außerdem sind fast alle Kameras mit einer Fokussierungseinheit sowie einem Filmtransportmechanismus ausgerüstet.

Um eine größere Lichtstärke zu erzielen, haben die modernen Kameras Linsen, durch deren Benutzung jedoch Abbildungsfehler entstehen, die durch komplizierte Linsensysteme ausgeglichen werden müssen. Die wichtigsten Abbildungsfehler sind: chromatische Abweichung, sphärische Abweichung, Koma und Verzeichnung, Astigmatismus und Bildfeldwölbung. Die Verzeichnung ist tonnenförmig, falls die Blende vor, kissenförmig, falls sie hinter dem Objektiv angeordnet ist; dieser Abbildungsfehler tritt auch bei Verwendung von Vorsatzlinsen auf.

Über Belichtungszeit (Verschlusszeit) und Blendenöffnung wird der für die optimale Filmbelichtung benötigte Lichteinfall geregelt. Beide stehen in proportionalem Verhältnis zueinander. Je geringer die Verschlusszeit, desto größer muss die Blende sein, damit dieselbe Lichtmenge auf den Film gelangen kann. Kürzere Verschlusszeiten (und damit größere Blendenöffnungen) werden gewählt, um Motive in Bewegung festzuhalten. Umgekehrt kann durch eine kleine Blendenöffnung (und eine entsprechend längere Verschlusszeit) die so genannte Schärfentiefe (oder Tiefenschärfe) vergrößert werden. Die Schärfentiefe bezeichnet jenen räumlichen Bereich, innerhalb dessen die auf einer Photographie festgehaltenen Objekte scharf wiedergegeben werden. Bei Photographien mit großer Schärfentiefe etwa sind sowohl die nahen als auch die entfernten Gegenstände detailgenäu zu erkennen. Bei vielen Kameras befindet sich auf dem Objektiv eine Skala, welche die Schärfentiefe für unterschiedliche Blendeneinstellungen angibt.

Es gibt eine Vielzahl von Kameramodellen für verschiedene Zwecke. Man unterscheidet nach dem Filmformat Großformatkameras (9x12 bis 24×30 cm), Mittelformatkameras (6x9, 6x7, 6x6, 6×4,5 cm), Kleinbildkameras (24x36, 18x24 mm) und Kleinstbildkameras (10x14 und 13×17 mm); ferner Mattscheibenkameras, Sucherkameras und Spiegelreflexkameras. Messsucherkameras sind mit einem Durchsichtsucher (mit integriertem Entfernungsmesser) ausgestattet, durch den der Photograph den Bildausschnitt wählen kann. Der Sucher zeigt jedoch nicht exakt den vom Objektiv erfassten Bildausschnitt, sondern lediglich ein annähernd identisches Bild. Wenn das vom Objektiv erfasste Bild nicht mit dern im Sucher gezeigten Bild übereinstimmt, spricht man von Parallaxe. Bei Motiven in größerer Entfernung wirkt, sich diese Abweichung kaum aus. Jedoch kann bei kurzen Entfernungen eine Parallaxe dazu führen, dass ein Motiv nicht vollständig auf der fertigen Photographie erscheint.

Einäugige und zweiäugige Spiegelreflexkameras sind mit Spiegeln ausgestattet, die das vom Objektiv erfasste Motiv in den Sucher leiten. Die zweiäugige Spiegelreflexkamera besitzt einen Sucher, der aus einer oben am Gehäuse angebrachten, horizontalen Einstellscheibe besteht. Von den zwei Objektiven der Kamerafront dient das untere der Belichtung des Filmes, das obere dem Betrachten des Motivs. Die beiden Objektive sind miteinander verbunden, so dass die Schärfenregulierung des einen Objektivs automatisch auch die des anderen nach sich zieht. Ein vom Sucherobjektiv erfasstes Bild wird über einen im 45-Grad-Winkel angebrachten Spiegel auf die Einstellscheibe projiziert. Während des Fokussierens betrachtet der Photograph den gewünschten Bildausschnitt. Das vom unteren Objektiv erfasste Bild wird auf den vor dem Gehäuserücken befindlichen Film gelenkt. Wie bei den Sucherkameras treten auch bei zweiäugigen Spiegelreflexkameras Parallaxen auf.

Bei der einäugigen Spiegelreflexkamera (ESR) dient das Objektiv sowohl zum Betrachten des Bildausschnitts als auch zum Belichten des Filmes. Über einen schrägstehenden Spiegel gelangt das spiegelverkehrte Abbild des Motivs durch ein Pentaprisma in den Sucher. Bei Betätigung des Auslösers, d. h. beim Öffnen des Verschlusses, wird der Spiegel hochgeklappt, so dass das einfallende Licht ungehindert den Film belichten kann. Bei einäugigen Spiegelreflexkameras treten keine Parallaxen auf.

Die meisten einäugigen Spiegelreflexkameras besitzen einen (elektronischen) Schlitzverschluss. Viele sind mit Belichtungsautomatik ausgestattet. Bei der Blendeneinstellung gibt es oft die Möglichkeit der elektronischen oder manuellen Regulierung. Immer mehr Kamerahersteller produzieren ESR-Kameras mit Autofokusvorrichtung, bei der die Entfernung des Motivs automatisch errechnet wird. Auch koordinieren zentrale Verarbeitungseinheiten die elektronischen Funktionen vieler Kameras. Die meisten Autofokuskameras nutzen zur Entfernungsbestimmung und zur Schärfenregulierung Infrarotlicht oder Ultraschall (aktives Autofokus). Andere sind mit einem passiven Autofokussystem ausgerüstet, bei dem die Brennweite der Kamera so lange verändert wird, bis die zwei von der Kamera aufgefangenen Bilder zur Deckungsgleichheit gebracht worden sind.

Der größte Vorteil der einäugigen Spiegelreflexkamera liegt darin, dass das im Sucher erscheinende Bild tatsächlich mit dem später auf den Film gebannten Bild identisch ist. Darüber hinaus ist die einäugige Spiegelreflexkamera relativ einfach zu bedienen. Auch bietet der Markt eine große Auswahl an Wechselobjektiven und Kamerazubehör. Aus diesen Gründen ist die ESR bei Berufs- wie Amateurphotographen gleichermaßen beliebt. Die Messsucherkamera, die früher wegen ihrer Kompaktheit und ihrer einfachen Handhabung von Photojournalisten verwendet wurde, ist weitgehend von der einäugigen Spiegelreflexkamera verdrängt worden. Sie ist aufgrund ihres einfacheren optischen Systems jedoch robuster, leichter und leiser als diese. Im Vergleich zu den anderen beiden Kameratypen ist die Handhabung von zweiäugigen Spiegelreflexkameras komplizierter. Auch wird nur eine geringe Auswahl an Wechselobjektiven angeboten. Wegen des größeren Negativformats allerdings können Photographien mit größerer Detailschärfe hergestellt werden: So benutzten etwa die US-Astronauten der Apollo-Mission eine zweiäugige Hasselblad-Spiegelreflexkamera für Aufnahmen auf dem Mond. Neben diesen Kameratypen gibt es außerdem die bei Photoamateuren äußerst beliebten Kleinbild-Kompaktkameras, deren Bedienung inzwischen weitgehend automatisiert worden ist.

Bei photographischen Objektiven unterscheidet man zwischen Weitwinkel-, Normal- und Teleobjektiven. Diese Bezeichnungen beziehen sich auf die Brennweite des Objektivs, die in Millimetern angegeben wird. Die Brennweite bezeichnet den Abstand des Brennpunkts von der Objektivlinse. Von der Brennweite eines Objektivs hängen der Bildausschnitt und die Tiefenschärfe der Photographie ab.

Großformat-, Messsucher- und Spiegelreflexkameras sind für alle drei Objektivtypen ausgerüstet. Bei Kleinbildkameras wird zumeist ein nicht austauschbares Standardobjektiv mit einer Brennweiten von 20 bis 35 Millimetern verwendet. Dieses Weitwinkelobjektiv bietet die größte Tiefenschärfe. Auch wird ein größerer Bildausschnitt als bei anderen Objektiven erfasst. Dadurch erscheinen fokussierte Motive in der Ferne äußerst klein. Extreme Weitwinkel- oder Fischaugenobjektive (Fisheye) bieten einen Bildwinkel von 180 Grad und mehr. Dadurch wird das auf den Film projiziertes Bild kreisförmig verzerrt. Objektive mit Brennweiten von 45 bis 55 Millimetern werden als Normalobjektive bezeichnet, da sich mit ihnen Aufnahmen machen lassen, die im Abbildungsmaßstab und in der Perspektive dem vom menschlichen Auge erfassten Bild am ähnlichsten sind. Objektive mit längeren Brennweiten werden als Teleobjektive bezeichnet. Sie bieten ein begrenztes Sichtfeld und geringe Tiefenschärfe, zeigen jedoch den Bildausschnitt in starker Vergrößerung an. Bei Kleinbildkaineras gelten Objektive mit Brennweiten von 85 Millimetern oder mehr als Teleobjektive.

Die Möglichkeiten der Automatik wurden mit Hilfe von Mikrochips und opto-elektronischen. Bauelementen perfektioniert. So erlaubt z. B. die Autofocuskamera die automatische Einstellung der Entfernung mittels Zoom- Objektiven. Zoom- Objektive sind Vario-Objektive, (veraltete Bezeichnung Gummilinse), d.h. Objektive mit veränderlicher Brennweite, welche eine kontinuierliche Veränderung des Abbildungsmaßstabs ohne Standortwechsel gestattet. Bei einem echten Zoom-Objektiv muss man die Schärfe nicht nachstellen, wenn man die Brennweite verändert. Zoom-Objektive für Kleinbildkameras haben 10 bis 20. Linsen. Die anfänglich mangelhafte Abbildungsleistung ist inzwischen erheblich verbessert worden, doch sind Objektive mit festen Brennweiten lichtstärker und zeichnen im Extrembereich schärfer. Zoomobjektive sind besonders zur Kombination mit einäugigen Spiegelreflexkameras geeignet, da veränderungen der Brennweite (und damit der Motivgröße) im Sucher sichtbar werden.

Auf das Kameraobjektiv aufgesetzte Kunststoff- oder Gläsflter dienen u. a. zur Veränderung der Farbgebung, des Kontrasts oder der Helligkeit. Außerdem können damit Spezialeffekte erzielt werden.

Heute beginnen sich die Grenzen zwischen klassischer Photographie und anderen Bildaufzeichnungssystemen zu verwischen. So werden bei Einzelbildphotographien statt Silberhalogenidemulsionen zunehmend elektronische Inforniationsträger verwendet. Die Auflösungen der Photos (493 x 373 und 320 x 240 Pixel) entspricht der Bildqualität gewöhnlicher PC-Monitore; ein 1 Megabyte großer Speicher reicht für acht bis 16 Bilder aus. Wenn-man diese über das Internet verschicken will, benötigt man die spezielle Picture Postcard Software. Dazu gibt es Video-Einzelbildkameras, welche die Bilddaten - unterschiedliche von den photographierten Gegenständen reflektierte Lichtwerte - auf einer Floppy-Disk aufzeichnen. Das fertige Bild kann dann auf einem gewöhnlichen Fernsehschirm betrachtet und über einen Drucker auf Papier gebracht werden. Auch sind CCD-Kamera-Module oder C-MOS-Kameramodule : in Kleinstformat für die Überwachung im Industriebereich, Sicherheitstechnik, Bildtelekommunikation u.a. bekannt. Beispielsweise eine CCD-Mini-Fingerkamera mit eine Gehäuse von 55 mm Länge und 18 mm Durchmesser sowie 14 mm Linsendurchmesser, einer Lichtempfindlichkeit von 0,5 Lux, einer Brennweite von 3,6 mm und automatischer Blendeneinstellung sowie einem Gewicht von 27 g oder ein CCD-Miniatur-Kamera-Modul mit einer Länge und Breite von 32 mm und einer Tiefe.von 14 mm, einer Lichtempfindlichkeit von 2 Lux, einer Brennweite von 4,5 mm, automatischer Blendeinstellung sowie einem Gewicht von 10 g. Vergleichweise hierzu ist ein C-MOS-Kameramodul mit einer Länge und Breite von 16 mm sowie einer Tiefe von 15 mm, einer Brennweite von 4,9 mm und einer Blende von 2,8 mm bekannt.

Auch sind Kombinationen als Sehhilfegerät bekannt Beispielsweise ist aus der DE 34 18 319 C1 ein Sehhilfegerät mit einem Videomonitor, einer Videokamera, einer in das Blickfeld der Videokamera bringbaren Unterlage für das zu lesende Gut und einer Vorrichtung zur Erzeugung einer Relativbewegung zwischen dem Objektiv der Videokamera und der Unterlage bekannt. Im einzelnen ist vorgesehen, dass im Strahlengang des Objektivs der Videokamera ein Abtastspiegel - mittels eines um zwei aufeinander senkrecht stehenden Achsen drehbaren Gelenks - gehalten ist. Für jede Drehachse ist ein Antriebsmotor mit dem Spiegel gekoppelt. Schließlich ist eine von Hand oder Fuß bedienbare Betätigungsvorrichtung vorgesehen, deren Stellsignale über eine elektronische Steuervorrichtung auf die Antriebsmotoren geschaltet werden.

Weiterhin ist aus dem DE 84 37 9921 U1 ein Sehhilfsgerät, insbesondere Lesehilfsgerät, mit einem Traggestell für zwei im Abstand nebeneinander angeordnete, optische Linsen bekannt. Das Gestell weist einen mittigen, zur Auflage auf die Nasenwurzel eines Benutzers bestimmten Stützteil, mindestens ein mit diesem mittigen Stützteil verbundenes Halteorgan zur Aufnahme der beiden Linsen sowie zwei an den freien Enden des Gestells schwenkbar befestigte, zur Auflage auf den Ohrenflügel-Ansätzen bestimmte Bügel auf. Im einzelnen ist vorgesehen, dass die beiden optischen Linsen lösbar und durch den Benutzer des Sehhilfsgerätes auswechselbar am Halteorgan bzw an den Halteorganen des Traggestelles befestigt ist bzw. sind, während dem das Halteorgan bzw. die Halteorgane mit dem mittigen Stützteil fest verbunden ist bzw. sind.

Eine Brille mit manuell einstellbarer Fokussiereinrichtung ist aus dem DE 298 04 368 U1 bekannt. Die Fokussiereinrichtung enthält ein Zusatzgestell, das zwei Linsenrahmen umfasst sowie zwei ringförmige Räder, die drehbar in diesen angeordnet sind. Weiterhin sind eine flexible Umlaufeinrichtung, welche die beiden Räder verbindet, und zwei in die beiden ringförmigen Räder eingepasste Linsen vorgesehen. Eine Eingreifplatte ist fest auf einem Zwischenstück einer Innenseite des Zusatzgestells angeordnet und mit einer Nase versehen. Ein Hauptgestell weist zwei Bügeln, die über die Ohren eines Benutzers geschoben werden, und zwei Linsenrahmen auf, in die zwei Linsen eingesetzt sind. Das Hauptgestell weist ferner an seiner Innenseite eine Ausnehmung auf, die so ausgebildet ist, dass sie die Nase der Eingreifplatte aufnehmen kann.

Ähnlich ist die optische Einrichtung für die Verwendung durch Personen, welche an wesentlichen Sehschwächen leiden, gemäß der DE 37 20 190 A1 aufgebaut. Diese optische Einrichtung umfasst ein konventionelles Brillengestell, das mit neutralen oder optischen Linsen ausgerüstet ist, wobei vor diesen Linsen ein Fernglaslinsensystem angebracht ist, das auf einen gemeinsamen Brennpunkt in einer vorbestimmten Entfernung von dem Brillengestell fokussiert ist. Im einzelnen ist vorgesehen, dass an dem Brillengestell gelenkig ein weiteres Gestell angebracht ist, an dem eine oder zwei prismatische Linsen angebracht sind. Weiterhin ist ein Hebel zum Bewegen derselben vor das bzw. vor jedes Fernglassystem vorgesehen, so dass auf diese Weise die Brennweite des gesamten Systems auf eine variable Brennweite verändert wird. Der Hebel dient außerdem zum Entfernen der erwähnten Linsen von dieser Position aus dem optischen Weg.

Eine Brille veränderbarer Brechkraft ist aus der DE 199 59 379 A1 bekannt. Diese Brille weist Sehoptiken auf, deren Brechkraft sowie Positionen und Richtungen der optischen Achsen veränderbar sind. Schließlich ist eine Einstelleinrichtung zum simultanen Einstellen der Brechkraft, der Position und der Richtung der optischen Achse der jeweiligen Sehoptik vorgesehen.

Ähnlich ist die Brille gemäß dem DE 299 11 082 U1 ausgestaltet, wobei für die Sehkraftverstärkung elf kleine Öffnungen vorgesehen sind, die durch drehbare Verstellungsmöglichkeiten auf jede gewünschte Sehstärke eingestellt werden können.

Weiterhin ist aus der DE 40 04 248 C1 eine binokulare Sehhilfe, mit einem auf den Kopf des Benutzers aufsetzbaren Rahmen, zwei derart von dem Rahmen getragenen optischen Systemen, dass die optische Achse jedes optischen Systems durch einen angenommenen Drehpunkt des dem optischen System zugeordneten Auges des Benutzers verläuft, so dass der Benutzer gleichzeitig mit jedem seiner beiden Augen durch das dem jeweiligen Auge zugeordnete optische System blicken kann, bekannt. Weiterhin sind Winkeleinstellmittel vorgesehen, um für jeweils eine von mindestens zwei unterschiedlichen Arbeitsentfernungen die Richtung der optischen Achsen der beiden optischen Systeme in der die optischen Achsen enthaltenden Ebene einzustellen. Die Winkeleinstellmittel weisen Führungen derart auf, dass beim Bewegen jedes der optischen Systeme in seiner Führung die zugehörige optische Achse um den angenommenen Drehpunkt des zugeordneten Auges des Benutzers gedreht wird. Schließlich sind Korrekturmittel vorgesehen, um eine Scharfeinstellung der optischen Systeme auf die jeweilige Arbeitsentfernung zu ermöglichen.

Auch sind Brillen mit Einstellung für die Lichtintensität bekannt. Beispielsweise ist aus dem DE 93 13 834 U1 eine Brille bekannt, welche ein ersten Paar von Gläsermontagenuten und ein zweites Paar von Gläsermontagenuten in zwei Fassungen des Brillengestells aufweist. Ein erstes Paar von Gläsern und ein zweites Paar von Gläsern, sind in das erste bzw. zweite Paar von Gläsermontagenuten eingebaut, wobei die ersten und zweiten Paare von Gläsern als Polarisationsfilter ausgebildet sind. Das zweite Paar von Gläsern weist um den Umfang herum Zähne auf. Zwei Getriebezahnräder sind im Gestell in der Mitte angebracht und sind mit den Zähnen des zweiten Paars von Gläsern in Eingriff. Weiterhin ist ein Antriebsmechanismus vorgesehen, mit dem die Getriebezahnräder gedreht werden können, wodurch das zweite Paar von Gläsern in Bezug auf das erste Paar von Gläsern gedreht wird,

Weiterhin sind auch elektronische Brillen bekannt. Beispielsweise ist aus dem DE 197 24 139 C1 eine elektronische Brille mit einem Brillengestell, welches mindestens eine elektronische Kamera und zwei Displays trägt, die jeweils über eine Betrachtungsoptik vom Benutzer binokular betrachtet werden können. Weiterhin ist eine Bildbearbeitungselektronik vorgesehen, welche das von der elektronischen Kamera aufgenommene Bild verarbeitet und ein Ausgangssignal zur Aussteuerung der Displays bereitstellt. Im einzelnen enthält mindestens eine der beiden Betrachtungsoptiken ein Keilglas, das durch zwei gegenüberliegende ebene Flächen begrenzt ist, die einen Winkel einschließen und das um eine Achse drehbar gelagert ist, welche annähernd senkrecht zu einer der beiden ebenen Flächen und annähernd parallel zur optischen Achse der Betrachtungsoptik verläuft.

Eine Brille veränderbarer Brechkraft, deren Brechkraft zum Unterstützen der Akkommodation des Auges einstellbar ist, ist aus der DE 199 59 379 A1 bekannt. Diese Brille weist zwei Sehoptiken auf, die jeweils eine Linse veränderbarer Brechkraft und ein Prisma mit veränderbarem Winkel haben. Außerdem sind ein erster Einstellmechanismus zum Einstellen der Brechkraft der Linsen veränderbarer Brechkraft, ein zweiter Einstellmechanismus zum Einstellen der prismatischen Brechkraft der Prismen mit veränderbarem Winkel und ein Verbindungsmechanismus vorgesehen. Der erste Einstellmechanismus ändert die Krümmung der vorderen Fläche der jeweiligen Linse, um ihre Brechkraft zu ändern. Der zweite Einstellmechanismus ändert den Neigungswinkel der vorderen Fläche des jeweiligen Prismas mit veränderbarem Winkel, um ihre prismatische Brechkraft zu ändern. Schließlich ordnet der Verbindungsmechanismus die Einstellungen von ersten und zweiten Einstellmechanismus einander zu, um die beiden Einstellungen miteinander zu verbinden. Dadurch ist ein komfortables binokulares Sehen auch dann ermöglicht, wenn die Brille für eine lange Zeit getragen wird und das Gleichgewicht zwischen Akkommodation und Vergenz ist nicht gestört. Im einzelnen weisen die Linsen veränderbarer Brechkraft eine flexible Hülle auf, die mit einer transparenten Flüssigkeit gefüllt ist.

Im einzelnen besteht das jeweilige Prisma mit veränderbarem Winkel aus zwei festen transparenten Plättchen und einer flexiblen Membran, die den Zwischenraum zwischen den festen transparenten Plättchen abdichtet. Der Innenraum ist mit transparenter Flüssigkeit gefüllt. Die vordere Fläche des jeweiligen Prismas variabler Brechkraft neigt sich, um den Kantenwinkel außen an der Seite der Schläfe eines Trägers gemäß dem Volumen der transparenten Flüssigkeit zu verändern. Eine erste Pumpe ist zum Einstellen des in die Linse variabler Brechkraft hineingedrückten Volumens der transparenten Flüssigkeit vorgesehen. Die erste Pumpe und ein Elektromagnet, der einen Kolben der ersten Pumpe antreibt, bilden einen ersten Einstellmechanismus zum Einstellen der Brechkraft der Linse. Eine zweite Pumpe ist zum Einstellen des in das Prisma mit veränderbarem Winkel hineingedrückten Volumens transparenter Flüssigkeit mit diesem verbunden. Die zweite Pumpe und ein Elektromagnet, der einen Kolben der zweiten Pumpe 3Ra antreibt, bilden einen zweiten Einstellmechanismus zum Einstellen der prismatischen Brechkraft des Prismas. Auf ähnliche Weise bilden eine dritte Pumpe, die mit der Linse veränderbarer Brechkraft verbunden ist, und ein Elektromagnet den ersten Einstellmechanismus. Eine vierte Pumpe, die mit dem Prisma veränderbaren Winkels verbunden ist, und ein Elektromagnet bilden den zweiten Einstellmechanismus.

Die Brille veränderbarer Brechkraft gemäß der DE 199 59 379 A1 weist außerdem einen Entfemungssensor zum Messen der Objektentfernung, einen Prozessor zum Steuern der vier Elektromagnete und einen Speicher auf, in dem die Beziehung zwischen der Objektentfernung und dem erforderlichen Antriebsmaß der Elektromagnete gespeichert ist. Der Prozessor liest das Antriebsmaß für die Elektromagnete entsprechend einem Signal für den Objektabstand von dem Entfernungssensor aus dem Speicher aus und steuert anschließend die Elektromagnete zum Einstellen der Brechkraft der Linsen veränderbarer Brechkraft. Gleichzeitig liest der Prozessor das dem Signal für den Objektabstand entsprechende Antriebsmaß für die Elektromagnete entsprechend der Zusatzbrechkraft aus dem Speicher aus und steuert die Elektromagnete zum Einstellen der prismatischen Brechkraft der Prismen mit veränderbarem Winkel. Der Prozessor hat dabei die Funktion eines Verbindungsmechanismus zum Zuordnen der Einstellung mit dem ersten Einstellmechanismus zu der Einstellung mit dem zweiten Einstellmechanismus, um so die eine Einstellung mit der anderen Einstellung zu verbinden. Mit dieser Konstruktion ändert sich bei einem geänderten Objektabstand sowohl die Brechkraft als auch die prismatische Brechkraft, wodurch das Gleichgewicht zwischen der Akkommodation und der Vergenz erhalten bleibt.

Eine ähnliche elektronische Brille mit Mikrocomputer, Entfernungsmesser und Autofokus ist aus dem JP 08-043 775 A bekannt. Hierbei sind eine Linse mit + 18D und eine Linse mit - 20D vorgesehen, wodurch ein Einstellungsbereich zwischen 5 m und 30 cm zur Verfügung gestellt wird. Der Entfernungsmesser ist im mittleren Brillensteg eingebaut.

Eine Video-Aufzeichnungsvorrichtung, die vom Benutzer wie eine Brille getragen werden kann, ist aus der DE 3342126 A1 bekannt. Bei der Aufzeichnung wird die Szene von dem Benutzer mit einer Miniatur-Fernsehkamera aufgenommen, die auf dem Brillengestell montiert ist (oder mit zwei Kameras, wenn die Aufzeichnung für räumliches Sehen verwendet werden soll). Die Miniatur-Kamera oder -kameras können innerhalb des Brillengestells versteckt sein und erlauben es dem Benutzer, die Szene normal) zu sehen und auch durch einen Sucher zu prüfen, der den für die Fernsehkamera verfügbaren Teil der Szene zeigt. Dies ermöglicht dem Benutzer, mit freien Händen Fotografien vorzunehmen und sorgt nahezu augenblicklich für das Aufzeichnen einer Szene, da das Hinsehen auf die Szene die Kamera und den Sucher in Richtung auf den Abschnitt der Szene richtet, der eingefangen werden soll. Da die Augen von verschiedenen Leuten unterschiedlich beabstandet sind, sollte das Blickfeld so eingestellt werden, dass es für den Benutzer passt. Es wird im allgemeinen eher zweckmäßig sein, die Stellung des Suchers auf dem Glas einzustellen, als einen Receptor innerhalb der Kamera auf oder ab zu justieren. Der Sucher kann seitlich oder nach oben und nach unten bewegt werden, und die Bewegung kann durch die Nasenunterlagen der Brille eingestellt werden. Falls eine Zoom-Einrichtung benötigt wird, könnte dies elektronisch erreicht werden, wobei jede einzelne Kamera einen CCD-Chip aufweist, der Licht aufnehmen und ein elektronisches Signal in Abhängigkeit von dem Bild erzeugen kann, das von dem optischen Ladungsverschiebeelement empfangen wird. Der Chip ist hinter einem einzelnen Linsenelement, typischerweise einer 16 mm-F2-Weitwinkellinse, und einem Spiegel angebracht. Die Kameraeinheit braucht keine Brennweiten-Einstellung zu besitzen, vorausgesetzt, dass eine optische Linse mit einer kurzen Brennweite verwendet wird. Eine Brennweiten-Einstellung könnte bei Bedarf vorgesehen werden, wobei zur Einstellung der Linse ein einfaches Brennweiten-Gewinde eingesetzt werden könnte. Wenn der Wunsch besteht, dass die Einstellung des Brennweiten-Gewindes verdeckt ist, könnte ein kleiner Gleithebel an der Rückseite des Gestells befestigt werden. Es könnte auch ein Brennweiten-Anzeiger vorgesehen sein, beispielsweise mit Farbcode, und längs des CCD derart eingesetzt sein, dass er nur für den Benutzer sichtbar ist. Alternativ kann auch eine automatische Fokussierung elektronisch oder mit anderen Mitteln vorgenommen werden:
Die Blende könnte, wie oben beschrieben, von Hand kontrolliert werden oder durch ein einfaches elektronisches Verfahren, wie beispielsweise eine Flüssigkeitskristalleinrichtung unmittelbar hinter der Kameralinse gesteuert werden. Alternativ könnte ein CCD mit einem ausreichenden Lichtakzeptierungsband ausgewählt werden, so dass die Blendenfunktion über eine automatische Verstärkungsreglerschaltung in der Aufzeichnungsvorrichtung erreicht werden könnte. Die Videoaufzeichnungsvorrichtung, insbesondere das Anbringen einer elektronischen Linse und eines Bildsuchers auf Gläsern, Schutzbrillen oder anderen Brillen gemäß der DE 3342126 A1 besitzt einen weiten Anwendungsbereich. Das übliche Aufzeichnen eines Video-Bandes oder elektronischer Standbilder kann mit einem Minimum an Aufwand und ohne Behinderung der Hände vorgenommen werden. Hierdurch kann die Kamera beim Schilaufen, Fahren, Fliegen usw. gehandhabt werden. Andere Anwendungen liegen im Schaffen von Do-it-yourself Video-Schulungsbändern, im industriellen Bereich, in der Schaffung von Ausbildungsfilmen und, in der Herstellung einer sofort lieferbaren Aufzeichnung, als Kamera für behinderte Personen und in Sicherheits- und Militärbereichen, wo eine Geheimhaltung manchmal erwünscht ist.

Schließlich ist aus der DE 196 24184 A1 eine Sonnenbrille oder Hörbrille, mit Empfangseinrichtung für Nachrichten, vorzugsweise Rundfunksendungen, bekannt. Im Oberteil des Bügels ist im Bereich des eingebauten Empfängers in verschiedenen Schlitzen ein Lautstärkeregler, ein Kombinationsschalter und ein Senderwahlrändel, angeordnet. Im hinteren Ohrabschnitt ist in einem weiteren Schlitz ein Ohrhörer mit einem Rohrbügel zu sehen, welcher zwecks Justierung an einer Verschiebevorrichtung befestigt ist. Diese besteht aus einem in einem Raster aufweisenden Schiebelager in verschiedenen Raststellungen verbringbaren Schiebeteil. Hier ist auch ein Mikrophon hinter einer Mikrophonöffnung vorgesehen, welches über den Kombinationsschalter wahlweise einschaltbar ist. Weiterhin ist ein Akkumulator in einen Einbauraum eingebaut, der mit einem Deckel versehen ist. Die einzelnen Geräteeinheiten in beiden Bügeln sind über in der Brücke befindliche Verbindungsleitungen miteinander verbunden. An den Gelenken können zu diesem Zweck Schleifringkontakte angeordnet sein oder aber Überbrückungsleitungen. Durch den Kombinationsschalter ist in zwei Stellungen der Empfänger ein- und ausschaltbar und in einer anderen sind die Mikrophone eingeschaltet. Unterhalb dem Bügel befinden sich Buchsen zum Anschluss eines Kassettenrekorders und dgl.

Wie die vorstehende Würdigung des Standes der Technik aufzeigt, sind binokulare optische Vorrichtungen, elektronische Brillen und Sehhilfen für verschiedene Anwendungsbereiche bekannt. Der wesentliche Nachteil der oben stehend beschriebenen optischen Vorrichtungen liegt darin, dass die Scharfeinstellung der optischen Systeme auf die jeweilige Arbeitsentfernung einen hohen mechanischen und ständigen manuellen Aufwand und in der Regel ein relativ hohes Gewicht erfordert. Auch die elektronischen Brillen mit Mikrocomputer, Entfernungsmesser und Autofokus können die Gesamtheit der unterschiedlichen Anforderungen nicht auf kostengünstige Art und Weise erfüllen, da diese entsprechend der Anforderungen eine kostenaufwendige Speziallösung zur Verfügung stellen. Dementsprechend haben elektronische Brillen keine hohen Verbreitungsgrad und in der Regel wird nach entsprechender Augenmessung eine angepasste Brille bzw. Sehhilfe für jeden einzelnen Benutzer hergestellt.

Weiterhin ist aus US-A-4,865,438 eine Brille mit Vorsatz in Form einer Fernrohrbrille bekannt, wobei für den Zoom der Fernrohrbrille ein einfaches Autofokus-System mit einem Fokussensor und einem unsichtbaren Autofokus-Hilfslicht zur Autofokussierung mittels Licht-Laufzeitverfahren benutzt wird. Das optische System ist fest mit der Brille verbunden, d.h. die Fernrohre (bei monokularen Systemen nur ein Fernrohr) sind in die Brillengläser eingepasst, d.h. nur für einen Träger bestimmt und die Fernrohrbrille ist nur für den stationären Gebrauch gedacht. Die Fernrohrbrille gemäß der US-A-4,865,438 berücksichtigt nicht die individuelle Refraktion (Brechungsfehler) des Patienten, was eine wesentliche Grundlage für eine gute Abbildung auf der Netzhaut und damit zur Korrektor des Sehfehlers des Brillenträgers ist.

Weiterhin ist aus der WO 91/06025 die Aggregation aus einer Brille und zwei Lupenvorsätzen und einer Beleuchtungseinrichtung und einer elektronischen Kamera zur Aufzeichnung von Bildinformationen bekannt, wodurch der Chirurg zu Dokumentationszwecken eine Aufnahme vom beleuchteten Operationsfeld machen kann. Sowohl in der Kamera als auch im Beobachtungs- Strahlengang sind identische Zoom-Linsen vorgesehen, welche synchron bei der manuellen Änderung der Brennweiten angesteuert werden. Zum Laufen muss der Chirurg neben den beiden Lupen durch die Brille schielen.

Ein Beispiel für eine aktive Scharfstell-Automatik für eine Spiegelreflexkamera, welche nach dem Triangulations-Prinzip arbeitet, ist aus Naumann/Schröder, "Bauelemente der Optik", Carl Hanser Verlag, 1992; Seiten 348-349 bekannt. Eine Anwendung dieses Funktionsprinzip zur Korrektor des Sehfehlers eines Brillenträgers ist daraus nicht bekannt.

Besonders bedeutsam ist dies, weil die auf optischem Gebiet tätige Industrie als äußerst fortschrittliche, entwicklungsfreudige Industrie anzusehen ist, die sehr schnell Verbesserungen und Vereinfachungen aufgreift und in die Tat umsetzt.

Der Erfindung liegt gegenüber den bekannten binokularen optischen Vorrichtungen die Aufgabe zugrunde, dass zur Erfüllung individueller Anforderungen des Trägers Kamerafunktion und Brillenfunktion in einer binokularen elektronischen Brille derart verschmolzen sind, dass sowohl Anforderungen hinsichtlich Bautiefe des Rahmens und Gesamtgewicht der Brille mit modifizierter Kamera als auch entsprechend einer individuellen Voreinstellung zur Korrektur verschiedener Sehfehler kontinuierlich ein gestochen scharfes Bild erzielbar ist und auch stark Sehbehinderten ein sicheres Bewegen ermöglicht wird.

Diese Aufgabe wird von einer binokularen elektronischen Brille mit den Merkmalen des Patentanspruchs 1 gelöst.

Die erfindungsgemäße optische Vorrichtung weist den Vorteil auf, dass auf überraschend einfache Art und Weise eine individuelle Korrektur von Sehfehlern vorgenommen werden kann. Das zusätzliche Gewicht der erfindungsgemäß modifizierten elektronischen Kamera, vorzugsweise eine Videokamera deren Linse nach vorne schaut, ist für das Gesamtgewicht der optischen Vorrichtung nicht ausschlaggebend, da eine Gewichtseinsparung durch den Verzicht auf eine manuelle Einstellvorrichtung für die Scharfeinstellung erzielt wird. Die Erfindung beruht dabei auf der erfindungsgemäßen Verschmelzung von Kamerafunktion und Brillenfunktion zur Erfüllung individueller Anforderungen des Trägers. Damit wird erstmalig eine weitgehend vollautomatische gebrauchstaugliche Brille unter weitgehender Benutzung von elektronischer Steuerung vorgestellt, welche die Realisierung unterschiedlicher Anforderungen bei hoher Präzision ermöglicht, ohne dass hierfür ein hoher Aufwand in Kauf genommen werden muß. Das breite Anwendungsgebiet erstreckt sich von Menschen mit starker Sehbehinderung bis hin zu Sehhilfen für Chirurgen oder bei der Montage von Mikromechanik in der Industrie u.a.. Die Bautiefe des Rahmens liegt vorzugsweise zwischen 28 mm und 50 mm und der Vergrößerungsbereich vorzugsweise zwischen 2,5-fach bis 10-fach. In der Praxis zeigt sich, dass das maximale Gesamtgewicht bei ca. 70 Gramm liegt. Durch den Wegfall der manuellen Verstellung, wie beispielweise bei der Brille mit manuell einstellbarer 'Fokussiereinrichtung gemäß dem DE 298 04 368 U1, ist die Brille bequem in der Handhabung und ermöglicht auch stark Sehbehinderten ein sicheres Bewegen.

Weiterhin weist die Erfindung den Vorteil auf, dass durch die einmalige und individuelle Voreinstellung der Aufwand für die vollautomatische Einstellung gering gehalten werden kann. Durch die laufende kontrastgesteuerte Fokussierautomatik wird kontinuierlich ein gestochen scharfes Bild erzielt.

Führungsmittel zur Drehung einzelner Linsen ermöglichen eine hochpräzise Lagerung und gewährleisten sehr geringe Reibungsverluste und eine sehr verschleißarme Funktionsweise. Das Linsensystem kann auch mit mehreren, umschaltbaren Brennweiten, insbesondere als doppelbrechender Kristall wie beim Linsensystem gemäß dem DE 90 16 891 U1 ausgestaltet werden oder die Linse ist durch Kippen um die senkrecht optischen Achse liegenden Achsen einstellbar, wie dies bei der Vorrichtung der DE 199 05 779 A1 im einzelnen beschrieben ist. Auch kann das Linsensystem eine mehrfach facettierte Linse mit mindestens vier optisch wirksamen Flächen aufweisen, von denen jeweils zwei Flächen paarweise mittels einer Dreheinrichtung zur Einstellung der gewünschten Brennweite des Linsensysterns in den Strahlengang des Linsensystems einbringbar sind, siehe beispielsweise das Linsensystem gemäß der DE 196 03 191 C2, welches für Kameras, Videokameras, Fernrohre o. dgl. vorgesehen ist. Auch können - mit entsprechender Anpassung bei Kameras eingesetzte Zoomobjektive eingesetzt werden, wie diese beispielsweise für eine Kamera mit motorgetriebenen Zoomobjetivtubus in der DE 41 04 548 C2 oder für eine Kamera mit motorgetriebenen Varioobjektiv in der DE 43 12 489 A1, oder für einen manuell und mittels Elektromotor betätigten Objektivtubus, in der DE 100 09 684 A1 beschrieben sind.

In Weiterbildung der Erfindung dient, gemäß Patentanspruch 3, die Steuereinrichtung zur Motorensteuerung und zur Erhöhung der Einstellgeschwindigkeit ist an der Abtriebsseite des Motors ein Getriebe angeordnet.

Diese Weiterbildung der Erfindung weist den Vorteil auf, dass mittels direkter Motorsteuerung und Getriebe die Fokussierung von 25 cm bis unendlich in ca 0,2 Sekunden bis maximal eine Sekunde erfolgt.

In Weiterbildung der Erfindung ist, gemäß Patentanspruch 4, als Getriebe ein Räder- oder Zugmittel- (Riemen-) oder Schraub- oder Koppel- oder Kurvengetriebe vorgesehen und sowohl die starren Getriebeteile wie Zahnräder und Wellen als auch die verformbaren Teile wie Riemen und Ketten sowie die Führungsmittel bestehen aus Kunststoff.

Ein solches Getriebe ermöglicht die Realisierung sehr feiner Abstufungen (d.h. einstufig große Untersetzungen) und die Übertragung hoher Drehmomente, ohne dass hierfür ein hoher Aufwand in Kauf genommen werden muss. In Kombination mit der erfindungsgemäßen Steuereinrichtung kann einerseits eine sehr genaue Positionierung der. Linse, andererseits eine hohe Verfahrgeschwindigkeit erzielt werden. Weiterhin ist von Vorteil, dass alle Bestandteile des Getriebes und der erfindungsgemäßen optischen Vorrichtung aus demselben Material, beispielsweise Kunststoff bestehen und durch Spritzgießen in Massenfertigung herstellbar sind, dass die Kombination ein verhältnismäßig geringes Laufgeräusch aufweist, dass diese gegenüber Fertigungs- und Montagetoteranzen sehr unempfindlich ist und dass diese sehr leicht (eine Kunststofflinse wiegt ca. 2 Gramm während eine Glaslinse ca. 8 Gramm wiegt). Vorzugsweise ist, gemäß Patentanspruch 5, zur Energieversorgung im Brillengestell ein Akkumulator angeordnet und am Brillengestell ist eine Anzeige für den Ladezustand des Akkumulators vorgesehen.

Über die Ladezustandanzeige, vorzugsweise als LCD-Anzeige, kann der Benutzer im Falle einer Störung eine Störungsursache ausschließen, zudem kann ein Warnhinweis auf fast leeren Akkumulator abgeleitet werden (z.B. blinken und/oder akustischer Hinweis als Warnton unterschiedlicher Höhe oder entsprechende Sprachausgabe).

Bei einer bevorzugten Ausgestaltung der Erfindung ist, gemäß Patentanspruch 6, eine mit der Kamera in Verbindung stehende Schnittstellenschaltung für den Anschluss von Aufzeichnungsmitteln vorgesehen.

Diese Ausgestaltung der Erfindung weist den Vorteil auf, dass vor allem Tests aufgezeichnet werden und eine entsprechende medizinische Auswertung vorgenommen werden kann. Auch im Freizeitbereich z.B. bei Sportveranstaltungen oder beim Wandern im Gebirge wird eine Dokumentation ermöglicht, welche später wieder abgespielt werden kann.

Vorzugsweise ist, gemäß Patentanspruch 7, im Bereich der Bügel ein Rundfunkempfänger und/oder ein Rufempfanger angeordnet, welche mit der Anzeige verbunden sind.

Die vorgenannte Kombination erlaubt sowohl die Unterhaltung des Benutzers und steigert den Freizeitwert der optischen Vorrichtung, zudem kann auch die Erreichbarkeit des Benutzers sichergestellt werden.

In Weiterbildung der Erfindung weist, gemäß Patentanspruch 8, das Gehäuse Lüftungsschlitze auf.

Diese Weiterbildung der Erfindung weist den Vorteil auf, dass eine Belüftung des Gehäuses ermöglicht wird und dadurch ein Beschlagen der Linsen durch Schwitzen oder bei Warm-Kalt-Wechsel, wie dies beim Eintreten in ein Haus auftreten kann, zuverlässig vermieden.

Bei einer bevorzugten Ausgestaltung der Erfindung ist, gemäß Patentanspruch 9, Vorsatz am Rahmen eine abnehmbare Blende vorgesehen.

Diese Ausgestaltung der Erfindung weist den Vorteil auf, dass ein Reinigen der Linsen ermöglicht wird und dass auch Blendwirkung zuverlässig vermieden werden kann.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
FIG. 1 die erfindungsgemäße optischen Vorrichtung in Frontansicht und
FIG. 2 in perspektivischer Seitenansicht.

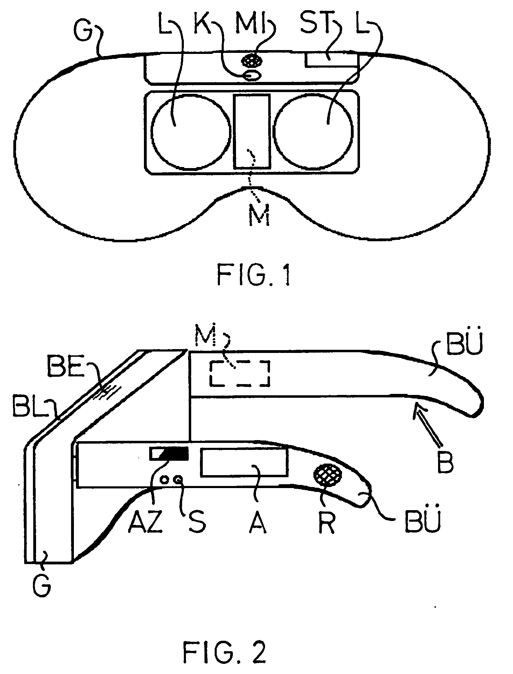

Die FIG. 1 und FIG. 2 zeigen eine bevorzugte Ausführungsform der erfindungsgemäßen optischen Vorrichtung in der Ausgestaltung als vollautomatisches Brillensystem. Prinzipiell ist das erfindungsgemäße Konzept für viele Anwendungsfälle geeignet, beispielsweise in allen als Helm mit Visier ausgestalteten Sehhilfen.

Die erfindungsgemäße binokulare optische Vorrichtung weist ein Brillengestell B auf, welches mindestens eine elektronische Kamera K, vorzugsweise eine Videokamera, Weiterhin ist ein vorzugsweise mittels Motor M verstellbares, frontseitig angeordnetes Linsensystem L vorgesehen. Das Linsensystem L steht mit der elektronischen Kamera K derart in Verbindung, dass Sehfehler durch Einstellung der Brechkraft der Linsen L und/oder Fokussierung einschließlich einer automatischen Einstellung auf Lese- oder Arbeitsdistanz korrigiert werden

Weiterhin ist eine mit Linsensystem L und der Kamera K verbundene elektrische Steuereinrichtung ST vorgesehen, welche einen Speicher zur Abspeicherung der manuellen Voreinstellwerte für beiden Augen als Sollwerte zur Anpassung für die automatische Korrektur von Augenabstand und Fehlsichtigkeit während des Betriebs aufweist.

Vorzugsweise dient die Steuereinrichtung ST zur Motorensteuerung und zur Erhöhung der Einstellgeschwindigkeit ist an der Abtriebsseite des Motors M ein Getriebe angeordnet. Als Getriebe ist ein Räder- oder Zugmittel- (Riemen-) oder Schraub- oder Koppel- oder Kurvengetriebe vorgesehen. Sowohl die starren Getriebeteile wie Zahnräder und Wellen als auch die verformbaren Teile wie Riemen und Ketten sowie die Führungsmittel bestehen aus Kunststoff, z.B. aus Makralon, gegebenenfalls glasfaserverstärkt.

Das Linsensystem L, vorzugsweise bestehend aus vier Linsen, ist aus Kunststoff ausgestaltet und außerdem sind Führungsmittel zur Einstellung durch Verbiegung und/oder Drehung der einzelnen Linsen bzw. der optischen Achsen auf den Zielpunkt vorgesehen. Bei der Anwendung als Medizinbrille ist eine 4-fache Vergrößerung, bei der Anwendung als Freizeitbrille ist eine 2,5-fache Vergrößerung eine Dimensionierung, welche sich nach umfangreichen Untersuchungen als praxistauglich hergestellt hat (wobei unter Gewichts- und Kostenaspekten im Rahmen der Erfindung auch 10-fache Vergrößerung liegt). Die Bautiefe des Brillengestells B liegt bei der Freizeitbrille bei ca. 28 mm bis 35 mm bei einer 2, 5-fachen Vergrößerung und bei der Medizinbrille bei ca. 35 mm bis 50 mm bei einer 4-fachen Vergrößerung. Der Fokussierbereich der Freizeitbrille beginnt bei ca. 2m bis 3m und bei den Medizinbrille bei 25 cm (Leseabstand).

Zur Energieversorgung von Kamera K, Steuereinrichtung ST und Motor M ist im Brillengestell B ein Akkumulator A angeordnet. Weiterhin ist am Brillengestell B eine Anzeige AZ für den Ladezustand des Akkumulators A vorgesehen.

Im Bereich der Bügel BÜ kann ein Rundfunkempfänger R und/oder ein Rufempfänger angeordnet werden, welche mit der Anzeige A verbunden sind. Weiterhin können eine mit der Kamera K in Verbindung stehende Schnittstellenschaltung S für den Anschluss von Aufzeichnungsmitteln vorgesehen werden.

Der Rahmen ist als staubdichtes geschlossenes Gehäuse G ausgestaltet, an welchem die Bügel BÜ angelenkt sind. Die Mechanik sowie die Linsen L, die Dioptrieneinstellung, die Fokussierung sowie die Steuereinrichtung für Fokussierung und ein Rahmen für die funktionsgerechte Halterung aller Komponenten sind im Gehäuse G untergebracht, welches auch Lüftungsschlitze BE aufweisen kann.

Schließlich ist als Vorsatz am Rahmen eine abnehmbare Blende BL vorgesehen und ein Mikrofon MI kann frontseitig angeordnet werden. Die Blende kann aus bruchfesten Cellulose Acetat bestehen und ist auswechselbar.

Im Vergleich zum bekannten Stand der Technik erfordert die erfniduhgsgemäße optische Vorrichtung keine ständige, manuelle Einstellung der Verstärkung und mit überraschend geringem Aufwand können Sehfehler weitgehend behoben werden, da permanent die kontrastgesteuerte Fokussierautomatik die Einstellung vornimmt.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann eine Fokussier-Linsengruppe, infolge einer Drehung eines Betätigungselementes (Führungsmittel) zum Zwecke der Fokussierung entlang der optischen Achse verschiebbar sein, oder eine Variator-Linsengruppe sowie einer Kompensator-Linsengruppe vorgesehen werden, die infolge einer axialen Verschiebung des Betätigungselementes zum Zwecke der Brennweitenänderung relativ zueinander entlang der optischen Achse verschiebbar sind, die Fassungen und das Brillengestell kann weitgehend aus Makralon (ggf. glasfaserverstärkt) hergestellt werden, die Videokamera kann neben dem Objektiv auch einen CCD-Sensor aufweisen und diese Komponenten sind neben der sonstigen Elektronik auf einer Leiterplatte angeordnet, eine zusätzliche Buchse für den Anschluss eines externen Akkumulators kann vorgesehen werden, die Einstellung, insbesondere die Voreinstellung kann auch mittels Fernbedienung und zugehörigem Fernbedienempfänger vorgenommen werden u.a.

## Patentansprüche

1. Binokulare elektronische Brille,
• mit einem Brillengestell (B), deren Rahmen als staubdichtes geschlossenes Gehäuse (G), an welchem die Bügel (BÜ) angelenkt sind, ausgestaltet ist,
• mit mindestens einer im Gehäuse (G) angeordneten elektronischen Videokamera (K) mit einem Objektiv, deren Linsen nach vorne schauen, und mit einem CCD-Sensor,
• mit einem motorisch (M) verstellbaren, frontseitig angeordneten Linsensystem (L) mit Linsen aus Kunststoff und mit Führungsmittel zur Einstellung durch Verbiegung und/oder Drehung der einzelnen Linsen, welches mit der elektronischen Kamera (K) in Verbindung steht,
• mit einer mit Linsensystem (L) und Kamera (K) verbundenen elektrischen Steuereinrichtung (ST) und
• mit einem mit der elektrischen Steuereinrichtung (ST) verbundenen Speicher, welcher die manuellen Voreinstellwerte für beiden Augen als Sollwerte zur Anpassung für die automatische Korrektur von Fehlsichtigkeit und Augenabstand während des Betriebs aufweist,
so dass die Korrektur von Sehfehler durch Einstellung der Brechkraft der Linsen (L) und/oder Fokussierung einschließlich einer automatischen Einstellung auf Lese- oder Arbeitsdistanz erfolgt und wobei eine kontrastgesteuerte Fokussierung vorgenommen wird, indem die Steuereinrichtung (ST) so ausgelegt ist, dass permanent eine Kontrastgesteueste Fokussierungeingestellt wird.

2. Brille nach Anspruch 1, **dadurch gekennzeichnet, dass** das Linsensystem (L) aus vier Linsen besteht und der Vergrößerungsbereich zwischen 2,5-fach und 10-fach liegt.

3. Brille nach Anspruch 1, **dadurch gekennzeichnet, dass** die Steuereinrichtung (ST) zur Motorensteuerung dient und dass zur Erhöhung der Einstellgeschwindigkeit an der Abtriebsseite des Motors (M) ein Getriebe angeordnet ist.

4. Brille nach Anspruch 3, **dadurch gekennzeichnet, dass** als Getriebe ein Räder- oder Zugmittel- (Riemen-) oder Schraub- oder Koppel- oder Kurvengetriebe vorgesehen ist und dass sowohl die starren Getriebeteile wie Zahnräder und Wellen als auch die verformbaren Teile wie Riemen und Ketten sowie die Führungsmittel aus Kunststoff bestehen.

5. Brille nach Anspruch 1, **dadurch gekennzeichnet, dass** zur Energieversorgung im Brillengestell (B) ein Akkumulator (A) angeordnet ist und dass am Brillengestell (B) eine Anzeige (AZ) für den Ladezustand des Akkumulators (A) vorgesehen ist.

6. Brille nach einem oder mehreren der Ansprüche 1 bis 5, **gekennzeichnet dadurch, daß** eine mit der Kamera (K) in Verbindung stehende Schnittstellenschaltung (S) für den Anschluss von Aufzeichnungsmitteln vorgesehen ist.

7. Brille nach Anspruch 5 oder 6, **dadurch gekennzeichnet, dass** im Bereich der Bügel (BÜ) ein Rundfunkempfänger (R) und/oder ein Rufempfänger angeordnet ist, welche mit der Anzeige (AZ) verbunden sind.

8. Brille nach einem oder mehreren der Ansprüche 1 bis 7, **dadurch gekennzeichnet, dass** das Gehäuse (G) Lüftungsschlitze (BE) aufweist.

9. Brille nach einem oder mehreren der Ansprüche 1 bis 8, **dadurch gekennzeichnet, dass** als Vorsatz am Rahmen eine abnehmbare Blende (BL) vorgesehen ist.

## Claims

1. A binocular electronic spectacles,
• having a spectacle frame (B), that frame is in the form of a dustproof closed housing (G), on which the side pieces (BÜ) are hinged,
• having at least one electronic video camera (K) arranged in the housing (G) and having an objective that lenses looking ahead and a CCD-sensor,
• having a lens system (L) with individual lenses made of plastic, which can be moved by a motor (M), is arranged at the front and is connected to the electronic camera (K) and having guide means are provided for adjustment by bending and/or rotation of the individual lenses,
• having an electrical control device (ST), which is connected to the lens system (L) and to the camera (K),
• having a memory for storing the manual preset values for both eyes as nominal values for adaptation for automatic correction for the eye separation and visual impairment during operation, that memory is connected to the electrical control device (ST),
such that visual impairments are corrected by adjusting the refractive power of the lenses (L) and/or focusing, including automatic adjustment to the reading distance or working distance and whereas a contrast-controlled focusing is carried out by configuring the control device (ST) for permanent setting of a contrast-controlled focusing.

2. Spectacles as claimed in claim 1, **characterized in that** the lens system (L) comprises four lenses, and **in that** has a magnification between 2.5 times and 10 times.

3. Spectacles as claimed in claim 1, **characterized in that** the control device (ST) is used for motor control, and **in that** a transmission is arranged on the output drive side of the motor (M) in order to increase the rate of adjustment.

4. Spectacles as claimed in claim 3, **characterized in that** a wheel or tension means (belt), or screw, clutch or cam transmission is provided as the transmission, and **in that** both the rigid transmission parts such as gear wheels and shafts as well as the deformable parts such as belts and chains, and the guide means, are made of plastic.

5. Spectacles as claimed in claim 1, **characterized in that** a rechargeable battery (A) is arranged as a power supply in the spectacle frame (B), and **in that** an indicator (AZ) for the state of charge of the rechargeable battery (A) is provided on the spectacle frame (B).

6. Spectacles as claimed in one or more of claims 1 to 5, **characterized by** an interface circuit (S), which is connected to the camera (K), being provided for the connection of recording means.

7. Spectacles as claimed in claim 5 or 6, **characterized in that** a broadcast radio receiver (R) and/or a call receiver are/is arranged in the area of the side piece (BÜ) and are connected to the indicator (AZ).

8. Spectacles as claimed in one or more of claims 1 to 7, **characterized in that** the housing (G) has ventilation slots (BE).

9. Spectacles as claimed in one or more of claims 1 to 8, **characterized in that** a removable panel (BL) is provided as an auxiliary device on the frame.

## Revendications

1. Un lunette binoculaire et électronique,
• comportant une monture de lunettes (B), son cadre étant configurée d'une antipoussière boîtier (G), sur lequel les pièces latérales (BU) sont articulés,
• comportant au moins une vidéocaméra (K) disposée dans le boîtier (G), le vidéocaméra comportant un objectif laquelle lentille regardez en avant, et comportant un capteur CCD,
• comportant un système de lentilles (L) disposé à l'avant, qui peut être déplacé par un moteur (M) et comprenant des lentilles en matière plastique et en ce que moyens de guidage sont prévus pour le réglage en flexion et/ou de rotation des lentilles individuelles, lequel est relié à la caméra électronique (K),
• comportant un dispositif de commande électrique (ST), qui est relié au système de lentilles (L) et à la caméra (K),
• comportant une mémoire qui est relié à la dispositif de commande électrique (ST) pour stocker le préréglage manuel valeurs pour les deux yeux en tant que valeurs nominales d'adaptation pour la correction automatique pour la séparation des yeux et des déficiences visuelles pendant le fonctionnement,
de telle sorte que des déficiences visuelles sont corrigées en ajustant la puissance de réfraction des lentilles et ou de focalisation, y compris le réglage automatique de la distance de lecture ou de la distance de travail et qu'un contraste contrôle focalisation est effectuée en ce que le dispositif de commande (ST) étant configuré de telle sorte qu'un contraste contrôle focalisation est réglée.

2. Le lunette selon la revendication 1, **caractérisé en ce que** le système de lentille (L) comprenant quatre lentilles avec un grossissement de 2,5 fois à 10 fois.

3. Le lunette selon la revendication 1, **caractérisé en ce que** le dispositif de commande (ST) est utilisé pour la commande de moteur, et **en ce qu'**une transmission est disposée sur le côté entraînement de sortie du moteur (M) afin d'augmenter le taux d'ajustement.

4. Le lunette selon la revendication 3, **caractérisé en ce qu'**une roue ou des moyens de tension (ceinture), ou à vis, l'embrayage ou de la transmission à came est prévu comme transmission, et **en ce que** les deux organes de transmission rigides tels que des roues dentées et des arbres, ainsi que les parties déformables tels que des courroies et des chaînes, et les moyens de guidage sont réalisés en matière plastique.

5. Le lunette selon la revendication 1, **caractérisé en ce qu'**une batterie rechargeable (A) pour l'alimentation en énergie est conçu dans la monture de lunettes (B), et **en ce qu'**un indicateur (AZ) pour l'état de charge de la batterie rechargeable (A) est prévue sur la monture de lunettes (B).

6. Le lunette selon l'une ou plusieurs des revendications 1 à 5, **caractérisé par** un circuit d'interface (S), qui est relié à la caméra (K) étant prévu pour le raccordement des moyens d'enregistrement.

7. Le lunette selon la revendication 5 ou 6, **caractérisé en ce qu'**un récepteur radio de radiodiffusion (R) et/ou un récepteur d'appel sont/est disposé dans la zone latérale des pièces latérales (BU) des lunettes et qui sont raccordés à l'indicateur (AZ).

8. Le lunette selon l'une ou plusieurs des revendications 1 à 7, **caractérisé en ce que** le boîtier (G) comporte des fentes d'aération fermés (BE).

9. Le lunette selon l'une ou plusieurs des revendications 1 à 8, **caractérisé en ce qu'**un panneau amovible (BL) est prévu comme dispositif auxiliaire sur le châssis.
